# EUROPÄISCHE PATENTANMELDUNG

(11) **EP 2 623 964 A1**
(43) Veröffentlichungstag der Anmeldung: **07.08.2013**
(21) Anmeldenummer: 12000766.1
(22) Anmeldetag: 06.02.2012
(51) Int. Cl.: G01N 23/04

(54) **Röntgengerät und Röntgenverfahren zur Untersuchung eines dreidimensionalen Untersuchungsobjekts**

(71) Anmelder: Kupper, Jürgen, 22523 Hamburg (DE)
(72) Erfinder: Kupper, Jürgen, 22523 Hamburg (DE)
(74) Vertreter: Werner, Richard

(57) **Zusammenfassung**

Röntgengerät zur Untersuchung eines dreidimensionalen Untersuchungsobjekts mit
● einem Röntgendetektor, der eine Vielzahl von Detektorelementen aufweist, die jeweils zur Erfassung einer Intensität von auf das Detektorelement auftreffender Röntgenstrahlung ausgebildet sind,
● einem Röntgenoptikarray, das zwischen dem Untersuchungsobjekt und den Detektorelementen angeordnet ist und eine Vielzahl von Röntgenoptiken enthält, die so angeordnet sind, dass vom Untersuchungsobjekt auf eine der Röntgenoptiken auftreffende Röntgenstrahlung auf mehrere der Detektorelemente abgebildet wird, und
● einer Auswerteeinrichtung, die mit den Detektorelementen erfasste Intensitäten auswertet und auf dieser Grundlage für eine Vielzahl von Volumenelementen des Untersuchungsobjekts jeweils eine Intensität der von dem Volumenelement ausgehenden Röntgenstrahlung ermittelt.

## Beschreibung

Die Erfindung betrifft ein Röntgengerät und ein Röntgenverfahren zur Untersuchung eines dreidimensionalen Untersuchungsobjekts. Derartige Röntgengeräte und -verfahren finden eine breite Anwendung in der Human- und Veterinärmedizin, aber auch zur Untersuchung unbelebter Objekte, beispielsweise bei der zerstörungsfreien Materialprüfung, etwa einer Prüfung von Schweißnähten in der Luftfahrt oder im Schiffbau, oder auch bei Gepäckkontrollen an Flughäfen.

Im einfachsten Fall trifft die von einer Röntgenquelle ausgesandte Röntgenstrahlung nach Durchstrahlen des Untersuchungsobjekts auf einen Röntgenfilm, der abhängig vom Absorptionsgrad des durchstrahlten Objekts unterschiedlich stark geschwärzt wird. Statt eines Röntgenfilms kann auch ein Röntgendetektor verwendet werden, dessen Detektorelemente die Intensität der auftreffenden Röntgenstrahlung messen, so dass ein entsprechendes Schwächungsbild berechnet werden kann. In beiden Fällen entsteht eine Projektion des dreidimensionalen Untersuchungsobjekts auf eine zweidimensionale Fläche. Tiefeninformationen über das Untersuchungsobjekt gehen verloren und es kann nicht unterschieden werden, ob ein bestimmter Absorptionsgrad Folge besonders röntgendichter Materialien oder besonders dicker Objekte ist.

Um zusätzlich Informationen über den Aufbau des Untersuchungsobjekts in drei Dimensionen zu erhalten, sind unterschiedliche Techniken entwickelt worden. Ein in der Medizin weit verbreitetes Verfahren ist die Computertomographie (CT), bei der das Untersuchungsobjekt in unterschiedlichen Richtungen durchleuchtet wird. Aus der erhaltenen Vielzahl von Projektionen wird im Wege einer auch als Rückprojektion bezeichneten mathematischen Transformation festgestellt, in welchen Volumenelementen des Untersuchungsobjekts eine besonders hohe Absorption der Röntgenstrahlung vorliegt. Auf diese Weise können Schichtbilder rekonstruiert werden. Um die Vielzahl der Projektionen aufzunehmen, werden Röntgendetektor und Röntgenquelle häufig auf gegenüber liegenden Seiten des Untersuchungsobjekts angeordnet und rotieren gemeinsam um das Untersuchungsobjekt herum.

Ein im Vergleich zur Computertomographie vereinfachtes Röntgenverfahren wird als Tomosynthese bezeichnet. Bei dieser Technik wird mit einem auf einer Seite des Untersuchungsobjekts fest angeordneten Detektor gearbeitet, und die Röntgenquelle überstreicht auf der anderen Seite des Untersuchungsobjekts einen Bogen über einen bestimmten Winkelbereich. Auch auf diese Weise werden mehrere Projektionsbilder gewonnen, aus denen Volumendaten über das Untersuchungsobjekt berechnet werden können.

Bei der sogenannten Röntgentopographie wird das Untersuchungsobjekt rasterförmig mit dem Strahl einer Röntgenquelle abgetastet, wobei häufig mit einem feststehenden Röntgenstrahl und einem relativ dazu rasterförmig bewegten Untersuchungsobjekt gearbeitet wird. Die geradlinig durch das Untersuchungsobjekt hindurchtretende Primärstrahlung wird unterdrückt. Lediglich die im Untersuchungsobjekt gestreute Strahlung wird von einem Röntgendetektor erfasst. Die Röntgentopographie eignet sich vorwiegend zur Charakterisierung von Mikro- und Nanostrukturen, zum Beispiel bei dünnwandigen Leichtbauwerkstoffen.

Ein Röntgenverfahren aus der Nuklearmedizin ist die Szintigraphie. Dabei werden einem Patienten radioaktiv markierte Tracer verabreicht, die sich in Gewebe mit erhöhtem Stoffwechsel, beispielsweise Tumorgewebe, anreichern. Mit einer Gammakamera wird nachgewiesen, an welchen Orten eine besonders hohe Konzentration der Strahlungsquelle vorliegt.

Davon ausgehend ist es die Aufgabe der Erfindung, ein Röntgengerät und ein Röntgenverfahren zur Untersuchung eines dreidimensionalen Untersuchungsobjekts zur Verfügung zu stellen, die eine Alternative zur Aufklärung der inneren Struktur des Untersuchungsobjekts bieten.

Diese Aufgabe wird gelöst durch das Röntgengerät zur Untersuchung eines dreidimensionalen Untersuchungsobjekts mit den Merkmalen des Anspruchs 1. Vorteilhafte Ausgestaltungen des Röntgengeräts sind in den sich anschließenden Unteransprüchen angegeben.

Das Röntgengerät hat
- einen Röntgendetektor, der eine Vielzahl von Detektorelementen aufweist, die jeweils zur Erfassung einer Intensität von auf das Detektorelement auftreffender Röntgenstrahlung ausgebildet sind,
- ein Röntgenoptikarray, das zwischen dem Untersuchungsobjekt und den Detektorelementen angeordnet ist und eine Vielzahl von Röntgenoptiken enthält, die so angeordnet sind, dass vom Untersuchungsobjekt auf eine der Röntgenoptiken auftreffende Röntgenstrahlung auf mehrere der Detektorelemente abgebildet wird, und
- eine Auswerteeinrichtung, die mit den Detektorelementen erfasste Intensitäten auswertet und auf dieser Grundlage für eine Vielzahl von Volumenelementen des Untersuchungsobjekts jeweils eine Intensität der von dem Volumenelement ausgehenden Röntgenstrahlung ermittelt.

Die Erfindung beruht auf der Erkenntnis, dass bei den eingangs geschilderten, bekannten Röntgenverfahren die nach Wechselwirkung mit dem Untersuchungsobjekt in der Röntgenstrahlung enthaltenen Informationen nur zu einem Bruchteil ausgewertet werden. So wird bei Verfahren, die Projektionen des Untersuchungsobjekts zur Grundlage haben, im Wesentlichen nur die Schwächung der Primärstrahlung ausgewertet. Die informationsreichen, nicht absorbierten, jedoch im Untersuchungsobjekt gestreuten Strahlen werden nicht ausgewertet oder sogar bewusst unterdrückt. Im Gegensatz dazu wird bei der Erfindung nicht nur festgestellt, an welchem Ort die Röntgenstrahlung in welcher Intensität auftrifft, sondern durch Verwendung des Röntgenoptikarrays kann zusätzlich berücksichtigt werden, unter welchem Winkel die Röntgenstrahlung auftrifft. Dadurch kann eine Tiefeninformation über das Untersuchungsobjekt gewonnen werden, ohne das Untersuchungsobjekt mehrfach oder aus unterschiedlichen Richtungen zu durchleuchten.

Der Röntgendetektor kann beispielsweise ein Festkörperdetektor sein, bei dem die auftreffende Röntgenstrahlung zunächst mit Hilfe eines Szintillators in sichtbares Licht umgewandelt wird. Bei derartigen Festkörperdetektoren ist jedem Bildpunkt ein Kondensator, ein Dünnfilmtransistor und eine Photodiode zugeordnet. Die Photodiode wandelt das sichtbare Licht in Elektronen um, die erzeugte Ladung wird von dem Kondensator gespeichert und mit Hilfe des Transistors ausgelesen. Durch Verwendung strukturierter Szintillatoren kann ein besonders hohes Auflösungsvermögen des Röntgendetektors erreicht werden. Bei sogenannten direkten Flachbilddetektoren wird anstelle des Szintillators und der Photodiode ein für Röntgenstrahlen empfindlicher Photoleiter verwendet. Grundsätzlich sind jedoch auch beliebige andere Röntgendetektoren geeignet, mit denen die Intensität der auftreffenden Röntgenstrahlung mit hinreichender Auflösung erfasst und einer weiteren Auswertung zugänglich gemacht werden kann.

Das Röntgenoptikarray ist zwischen dem Untersuchungsobjekt und den Detektorelementen des Röntgendetektors angeordnet, so dass vom Untersuchungsobjekt ausgehende Röntgenstrahlung vor dem Erreichen des Röntgendetektors auf das Röntgenoptikarray auftrifft. Das Röntgenoptikarray weist eine Vielzahl von Röntgenoptiken auf. Diese Röntgenoptiken können insbesondere rasterförmig angeordnet sein. Die Anzahl der Röntgenoptiken des Röntgenoptikarrays kann relativ klein sein und beispielsweise nur fünf betragen. Es kann jedoch auch mit einer größeren Anzahl von Röntgenoptiken gearbeitet werden, beispielsweise 50, 100, 500 oder mehr, wobei die Anzahl der vorhandenen Detektorelemente in der Regel jedenfalls nicht überschritten wird. Die Fläche des von der Gesamtheit der Röntgenoptiken gebildeten Röntgenoptikarrays kann im Wesentlichen der Fläche des von der Vielzahl der Detektorelemente gebildeten Röntgendetektors gleichen, wobei die Röntgenoptiken bevorzugt eng benachbart angeordnet sind, so dass die Fläche des Röntgenoptikarrays im Wesentlichen von den Röntgenoptiken ausgefüllt ist.

Jede Röntgenoptik bildet die vom Untersuchungsobjekt auf sie auftreffende Röntgenstrahlung auf mehrere Detektorelemente ab. Das bedeutet, dass jede Röntgenoptik definierte Abbildungseigenschaften aufweist, die eine Zuordnung zwischen die auftreffende Röntgenstrahlung charakterisierenden Größen zu einem der Detektorelemente ermöglichen. Beispielsweise kann eine feste Zuordnung zwischen einem Winkel oder einem Winkelbereich, unter dem ein Röntgenstrahl auf die jeweilige Röntgenoptik auftrifft, und einem bestimmten Detektorelement, auf das der Röntgenstrahl abgebildet wird, existieren. Diese von der Röntgenoptik bewirkte Abbildung erfordert nicht notwendigerweise, dass auf dem Röntgendetektor ein anschauliches, ohne spezielle Verarbeitungsschritte interpretierbares Bild entsteht. Dies kann allerdings der Fall sein, insbesondere wenn die Abbildungseigenschaften der Röntgenoptiken denen herkömmlicher, beispielsweise in der Fotografie verwendeter Optiken so weit entsprechen, dass z.B. eine Brennweite der Röntgenoptik angegeben werden kann.

Die Röntgenoptiken des Röntgenoptikarrays können relativ zu den Detektorelementen so angeordnet sein, dass eine bestimmte Untermenge der Detektorelemente einer bestimmten Röntgenoptik fest zugeordnet ist und vom Untersuchungsobjekt auf das Röntgenoptikarray auftreffende Röntgenstrahlung nur dann auf diese Untermenge der Detektorelemente gelangt, wenn die Röntgenstrahlung auf die genannte Röntgenoptik auftrifft. Dies ist jedoch nicht notwendig. Ebenfalls möglich ist, dass Röntgenstrahlung, die unterschiedliche Röntgenoptiken passiert hat, auf ein bestimmtes Detektorelement abgebildet wird, so dass sich die von den einzelnen Röntgenoptiken erzeugten Bilder ganz oder teilweise überlappen.

Die Auswerteeinrichtung ist dazu ausgebildet, die mit den Detektorelementen erfassten Intensitäten auszuwerten. Zu diesem Zweck kann sie mit den Detektorelementen über eine oder mehrere Datenleitungen verbunden sein. Auf Grundlage der erfassten Intensitäten kann die Auswerteeinrichtung für eine Vielzahl von Volumenelementen des Untersuchungsobjekts jeweils eine Intensität der von dem Volumenelement ausgehenden Röntgenstrahlung ermitteln. Mit der von dem Untersuchungsobjekt ausgehenden Röntgenstrahlung ist die Gesamtheit aller aus dem bestimmten Volumenelement des Untersuchungsobjekts kommenden Röntgenstrahlen gemeint. Dabei kann es sich gleichermaßen um durch das Volumenelement geradlinig hindurchtretende Primärstrahlung handeln, um in dem Volumenelement gestreute Strahlung oder um von einer internen Röntgenquelle innerhalb des Volumenelements ausgesandte Röntgenstrahlung. Um die Intensität der zur Auswertung zur Verfügung stehenden Streustrahlung zu erhöhen, kann gegebenenfalls ein Kontrastmittel eingesetzt werden, insbesondere bei einer medizinischen Anwendung.

Die Auswerteeinrichtung kann für jedes Volumenelement des Untersuchungsobjekts aus den von den Detektorelementen erfassten Intensitäten eine Intenstität der von dem jeweiligen Volumenelement ausgehenden Röntgenstrahlung ermitteln, weil die Abbildungseigenschaften des Röntgenoptikarrays bekannt sind. Insbesondere können diese Abbildungseigenschaften in Form eines mathematischen Modells oder einer Tabelle in der Auswerteeinrichtung hinterlegt sein.

Weitere Parameter, die von der Auswerteeinrichtung herangezogen werden können, sind die Abstände zwischen einer Röntgenquelle und dem Röntgendetektor, zwischen Röntgenquelle und Untersuchungsobjekt und/oder zwischen Untersuchungsobjekt und Röntgendetektor. Sofern diese Abstände nicht aufgrund einer vorgegebenen Anordnung bekannt sind, können sie gemessen und der Auswerteeinrichtung zur Verfügung gestellt werden, beispielsweise mit Hilfe einer Laser- oder Ultraschallabstandsmesseinrichtung. Ebenfalls von der Auswerteeinrichtung herangezogen werden können die folgenden Parameter: eine bekannte Strahlschwächung durch das Untersuchungsobjekt (z.B. auf Grundlage einer gemessenen Differenz zwischen Strahlintensität mit und ohne Untersuchungsobjekt) und/oder bekannte Absorptions- und/oder Streueigenschaften des Untersuchungsobjekt. Das Röntgengerät kann mit Hilfe eines Phantoms regelmäßig geeicht werden.

Die Anzahl der Volumenelemente des Untersuchungsobjekts, deren Anordnung und Form kann variieren. Beispielsweise kann mit einer Auflösung von 20 x 20 x 20 Volumenelementen (Voxeln) gearbeitet werden. Auch wenn noch viel höhere Auflösungen wünschenswert sind, können selbst mit noch deutlich geringeren Auflösungen praxisrelevante Ergebnisse erzielt werden, sowohl unter Verwendung sehr großer Volumenelemente, als auch bei einer Beschränkung der Auswertung auf einen bestimmten Volumenbereich des Untersuchungsobjekts, in dem die Vielzahl von Volumenelementen konzentriert angeordnet ist.

Der Begriff "Röntgenstrahlung" bezeichnet elektromagnetische Wellen mit Photonenenergien zwischen 100eV und einigen MeV, entsprechend einem Wellenlängenbereich von etwa 10⁻⁸ m bis etwa 10⁻¹² m. Die genannten Bereiche überlappen sich mit dem ultravioletten Licht und der Gammastrahlung. Bei medizinischen Anwendungen wird häufig im Energiebereich zwischen etwa 25 keV und etwa 120 keV gearbeitet. Sowohl für spezielle Anwendungen in der Medizin als auch für sonstige technische Anwendungen, etwa in der Materialprüfung, können jedoch auch ganz andere Energiebereiche genutzt werden. Nicht unterschieden werden soll zwischen den unterschiedlichen Entstehungsprozessen der Röntgenstrahlung. Bei Verwendung einer Röntgenröhre wird die Röntgenstrahlung in Form von Bremsstrahlung erzeugt. Es sollen jedoch auch diejenigen elektromagnetischen Wellen als Röntgenstrahlung betrachtet werden, die bei radioaktiven Zerfallsprozessen entstehen (Gammastrahlen) und beispielsweise bei der eingangs erläuterten Szintigraphie genutzt werden. Ebenfalls möglich ist die Verwendung gepulster Röntgenstrahlung. Dies ermöglicht unter anderem eine Analyse der *temporal point spread function* (TPSF).

In einer Ausgestaltung weist das Röntgengerät eine Röntgenquelle zur Bestrahlung des Untersuchungsobjekts mit Röntgenstrahlen auf. Bei der Röntgenquelle kann es sich insbesondere um eine Röntgenröhre handeln. Durch Verwendung einer solchen Röntgenquelle kann mit hinsichtlich Strahlungsrichtung, Intensität und Energiebereich wohl definierter Röntgenstrahlung gearbeitet werden.

In einer Ausgestaltung ist die relative Anordnung von Röntgenquelle, Röntgendetektor und Röntgenoptikarray so gewählt, dass von der Röntgenquelle ausgestrahlte Primärstrahlung nicht auf den Röntgendetektor trifft. Beispielsweise kann sich der Röntgendetektor in einem seitlichen Abstand von einer geraden Linie zwischen Röntgenquelle und Untersuchungsobjekt befinden. Auch das Röntgenoptikarray kann so angeordnet sein, dass die Primärstrahlung nicht auf eine der Röntgenoptiken auftrifft. Durch die genannte Anordnung wird im Wesentlichen nur die im Untersuchungsobjekt gestreute Röntgenstrahlung für die weitere Auswertung herangezogen. Mit Hilfe der Auswerteeinrichtung kann aus der Verteilung der auf die einzelnen Detektorelemente auftreffenden Intensität der Röntgenstrahlung festgestellt werden, in welchem Volumenelement des Untersuchungsobjekts Streuprozesse besonders häufig sind. Bei dieser Vorgehensweise wird die in der Schwächung der Primärstrahlung durch Absorptionsprozesse enthaltene Information nicht ausgewertet.

In einer Ausgestaltung weist das Röntgengerät ein Streustrahlenraster auf, das zwischen einem Untersuchungsobjekt und dem Röntgenoptikarray angeordnet werden kann. Das Streustrahlenraster lässt im Wesentlichen nur die Primärstrahlung, d.h. die geradlinig von der Röntgenquelle durch das Untersuchungsobjekt hindurchtretende Röntgenstrahlung, hindurch. Im Untersuchungsobjekt gestreute Röntgenstrahlung wird von dem Streustrahlenraster herausgefiltert. Dadurch, dass ein solches Streustrahlenraster zwischen dem Untersuchungsobjekt und dem Röntgenoptikarray angeordnet werden kann, ist es möglich, durch Differenzbildung einer Messung mit und einer Messung ohne Streustrahlenraster die auf die im Untersuchungsobjekt gestreute Röntgenstrahlung zurückzuführenden Intensitäten der auf die Detektorelemente auftreffenden Röntgenstrahlung zu ermitteln. Dann kann die weitere Auswertung auf Grundlage dieser Intensitäten erfolgen, so dass die Primärstrahlung nicht berücksichtigt wird. Grundsätzlich ist es allerdings auch möglich, die von der Primärstrahlung herrührenden Intensitäten ebenfalls auszuwerten und dadurch weitere Informationen über den Aufbau des Untersuchungsobjekts zu gewinnen, bzw. die aus den Streustrahlen und den Primärstrahlen einzeln erhaltenen Informationen zu kombinieren.

In einer Ausgestaltung weist die Röntgenquelle mindestens zwei Betriebsarten auf, in denen sie Röntgenstrahlung unterschiedlicher Wellenlängen ausstrahlt. Die auftretenden Wechselwirkungen zwischen der Röntgenstrahlung und dem Untersuchungsobjekt hängen wesentlich von der Wellenlänge bzw. Photonenenergie der Röntgenstrahlung ab. Daher stehen unterschiedliche Kontrastmechanismen im Vordergrund, so dass in den beiden Betriebsarten oder auch durch einen Vergleich der in den beiden Betriebsarten ermittelten Daten unterschiedliche Aussagen über die einzelnen Volumenelemente des Untersuchungsobjekts möglich sind.

In einer Ausgestaltung weist das Röntgengerät eine weitere Röntgenoptik auf, die zwischen dem Untersuchungsobjekt und dem Röntgenoptikarray so angeordnet ist, dass ein Bild des Untersuchungsobjekts erzeugt und von dem Röntgenoptikarray auf den Röntgendetektor abgebildet wird. Das Röntgenoptikarray bildet also nicht unmittelbar das Untersuchungsobjekt selbst auf den Röntgendetektor ab, sondern zuvor wird von der weiteren Röntgenoptik ein Bild des Untersuchungsobjekts erzeugt, das wiederum von dem Röntgenoptikarray auf den Röntgendetektor abgebildet wird. Die Erzeugung eines Bildes des Untersuchungsobjekts mit der weiteren Röntgenoptik, bevor die Abbildung mit dem Röntgenoptikarray auf den Röntgendetektor erfolgt, erlaubt unter anderem eine Anpassung des Abbildungsmaßstabs an die Gegebenheiten des Röntgenoptikarrays. Dadurch kann das Röntgengerät an unterschiedliche Anwendungsfälle angepasst werden.

In einer Ausgestaltung weist die weitere Röntgenoptik ein weiteres Röntgenoptikarray auf. Grundsätzlich kann es sich bei der weiteren Röntgenoptik auch um eine einzelne Röntgenoptik, etwa in Form einer Röntgenlinse, handeln.

In einer Ausgestaltung weist die weitere Röntgenoptik, eine Röntgenoptik des Röntgenoptikarrays und/oder eine Röntgenoptik des weiteren Röntgenoptikarrays eine Reflexionsoptik, eine Beugungsoptik oder eine Brechungsoptik auf. Reflexion, Beugung und Brechung sind drei physikalische Prozesse, die bei den betreffenden Optiken für die Beeinflussung des Strahlengangs beim Hindurchtreten durch die jeweilige Röntgenoptik maßgeblich sind. Grundsätzlich sind alle drei Arten von Röntgenoptiken für die Erfindung geeignet, denn mit Hilfe jedes der drei Mechanismen kann eine definierte Abbildung der auf die betreffende Röntgenoptik auftreffenden Röntgenstrahlung auf die dahinter angeordneten Detektorelemente erreicht werden. Welcher Typ der Röntgenoptik für den jeweiligen Anwendungsfall am besten geeignet ist, kann nötigenfalls in Versuchen ermittelt werden.

In einer Ausgestaltung weist die Reflexionsoptik einen gekrümmten Spiegel, eine Mikrokanalplatte, eine Hummeraugenoptik oder einen Kristallspiegel auf. Bekannte Beispiele für Röntgenoptiken mit gekrümmten Spiegeln sind beispielsweise Schwarzschild-Optiken, die aus zwei sphärischen Spiegeln bestehen. Das vom Untersuchungsobjekt auf die Schwarzschild-Optik auftreffende Licht wird an der konkaven Seite eines großen Spiegels reflektiert, dann an der konvexen Seite eines kleineren Spiegels. Anschließend passiert die Röntgenstrahlung auf dem Weg in Richtung zu einem Brennpunkt ein Loch in dem großen Spiegel. Schwarzschild-Optiken können vor allem für weiche Röntgenstrahlung eingesetzt werden, weil eine Reflexion unter annähernd senkrechtem Einfall zu den Spiegeloberflächen stattfindet.

Eine andere bekannte Form einer Reflexionsoptik für Röntgenstrahlung ist die sogenannte Montel-Optik. Eine solche besteht aus zwei nebeneinander angeordneten und senkrecht aufeinander stehenden, elliptisch gekrümmten Zylinderspiegeln. Die gekrümmten Zylinderspiegel werden mit Blenden am Eingang und am Ausgang der Optik kombiniert. Die Reflexion der Röntgenstrahlung an den gekrümmten Zylinderspiegeln erfolgt stets in einem kleinen Winkel zur optischen Achse, so dass diese Form der Röntgenspiegeloptik auch für höhere Photonenenergien geeignet ist.

Eine andere bekannte Bauart einer Röntgenspiegeloptik mit gekrümmten Spiegeln ist die sogenannte Kirkpatrick-Baez-Optik, die aus zwei hintereinander angeordneten und senkrecht aufeinander stehenden, elliptisch gekrümmten Zylinderspiegeln besteht. Die Oberfläche des ersten Spiegels ist zum Beispiel waagerecht ausgerichtet, die des zweiten Spiegels senkrecht. Die beiden elliptischen Spiegel haben die gleichen Brennpunkte, so dass die Fokuslinie des ersten Spiegels mit der dazu senkrecht stehenden des zweiten Spiegels in einer Fokusebene zusammenfällt.

Eine weitere Möglichkeit einer Röntgenoptik mit gekrümmten Spiegeln ist die sogenannte Wolter-Optik. Wolter-Optiken weisen einen elliptischen oder parabolischen, rotationssymmetrischen Spiegel und einen hyperbolischen, rotationssymmetrischen Spiegel auf. Die Spiegel sind meist Totalreflexionsspiegel. Sie sind als abbildende Optik besonders geeignet, wobei im Allgemeinen eine konzentrische Anordnung mehrerer Spiegel der genannten Art konzentrisch zu einer optischen Achse und ineinandergeschachtelt erforderlich ist. Bei Wolter-Optiken ist auch eine Verwendung elliptischer oder hyperbolischer Zylinderspiegel möglich. In diesem Fall wird die einfallende Röntgenstrahlung durch einen aus elliptischen und hyperbolischen Spiegeln bestehenden Satz senkrecht stehender Spiegel zuerst in horizontaler Richtung fokussiert und trifft dann auf einen Satz horizontal stehender Spiegel, die die Röntgenstrahlung in vertikaler Richtung fokussieren.

Eine andere Art einer auf Reflexion beruhenden Röntgenoptik ist eine sogenannte Mikrokanalplatte. Dabei handelt es sich um eine im Wesentlichen ebene Platte mit zu einer Oberfläche der Platte senkrecht angeordneten Mikrokanälen. Die Mikrokanäle können z.B. die einen quadratischen oder sechseckigen Querschnitt aufweisen. Durch Reflexion der Röntgenstrahlung an den Seitenwänden der Kanäle erfolgt eine Abbildung der einfallenden Röntgenstrahlung.

Eine Hummeraugenoptik besteht aus einem Gitter aus Mikrokanälen, deren Eintrittsöffnungen auf einer Kugeloberfläche liegen und die einzelnen Kanäle in Richtung zu dem Kugelmittelpunkt ausgerichtet sind. Mit anderen Worten handelt es sich um eine Art gekrümmter Mikrokanalplatte. Es erfolgt ebenfalls eine Reflexion der Röntgenstrahlung an den Seitenwänden der einzelnen Kanäle. Dadurch wird die Röntgenstrahlung zu einem Brennpunkt hin gespiegelt.

Kristallspiegel nutzen die sogenannte Bragg-Reflexion, um Röntgenstrahlen umzulenken. Die Bragg-Reflexion ist unter anderem von der Wellenlänge der Röntgenstrahlung abhängig. Oberflächen bestimmter Kristalle, die als Kristallspiegel verwendet werden, ermöglichen relativ große Reflexionswinkel. Es können auch gekrümmte Kristallspiegel zur Fokussierung von Röntgenstrahlung verwendet werden.

In einer Ausgestaltung weist die Beugungsoptik eine Fresnel-Zonenplatte oder ein Beugungsgitter auf. Eine Fresnel-Zonenplatte ist ein zirkulares Absorptions- oder Phasengitter, das einfallende Röntgenstrahlung fokussiert. Eine weitere Form einer geeigneten Beugungsoptik ist ein Absorptions- oder Phasengitter, mit dem die Richtung der einfallenden Röntgenstrahlung gezielt beeinflusst werden kann. Auch ein solches Beugungsgitter ist als Röntgenoptik für die Erfindung geeignet.

In einer Ausgestaltung weist die Brechungsoptik eine geprägte Metallfolie, eine gerollte Prismen-Röntgenlinse, eine im LIGA-Verfahren hergestellte Röntgenlinse oder eine mittels reaktivem Ionenätzen aus Silizium hergestellte Röntgenlinse auf.

Geprägte Metallfolien für die Verwendung als refraktive Röntgenlinse können insbesondere durch Prägen von einigen hundert Mikrometer dicken Berillium- oder Aluminiumfolien mit Nadeln, deren Spitzen rotationsparabolisch geformt sind, hergestellt werden. Viele solcher Einzellinsenelemente, präzise in einer Reihe angeordnet, bilden eine refraktive Röntgenlinse. Eine andere Möglichkeit, refraktive Röntgenlinsen herzustellen, bietet das sogenannte LIGA-Verfahren. LIGA ist eine Abkürzung für Lithographie, Galvanik und Abformung. Unter Verwendung dieser Technik können sowohl parabolische Linsen, Fresnel-Linsen, Mosaik-Linsen als auch sogenannte Clessidra- und Prismenlinsen hergestellt werden. Grundsätzlich können Mikrostrukturen mit hohen Aspektverhältnissen und geringen Oberflächenrauhigkeiten in Kunststoffen oder Metallen hergestellt werden. Wegen der weitgehenden Freiheit bei der Wahl der Geometrie der Strukturen können die genannten, unterschiedlich aufgebauten Linsentypen hergestellt werden. Beispiele und theoretische Grundlagen refraktiver Röntgenoptiken sind in der Dissertation "Röntgenlinsen mit großer Apertur" von Markus Simon, ISBN 978-3-86644-530-7 erläutert.

Eine Alternative zum LIGA-Verfahren ist das reaktive Ionenätzen aus Silizium. Mit diesem Fertigungsverfahren können insbesondere Reihen nacheinander angeordneter Sacklöcher mit parabolischen Geometrien hergestellt werden. Mehrere derartige Linsenplatten können für eine Fokussierung der Röntgenstrahlung in unterschiedlichen Raumrichtungen zuständig sein und beispielsweise rechtwinklig zueinander hintereinander im Strahlengang angeordnet werden, um einen Punktfokus zu erreichen.

Ebenfalls verwendbar sind Röntgenoptiken, die Brechung und Beugung der Röntgenstrahlung kombinieren, beispielsweise wie beschrieben im US-Patent Nr. 7,742,574 B2. Weitere Einzelheiten zu Kirkpatrick-Baez und Hummeraugenoptiken sind in dem Überblicksartikel "Kirkpatrick-Baez (KB) and Lobster Eye (LE) Optics for Astronomical and Laboratory Applications" von René Hudec in der Fachzeitschrift X-Ray Optics and Instrumentation, Vol. 2010, Art. ID 139148, zusammengestellt. Weitere Beispiele geeigneter Reflexions-Röntgenoptiken sind in den US-Patenten Nr. 7,881,432 B2 und Nr. 7,231,017 B2 beschrieben.

In einer Ausgestaltung sind mindestens ein weiterer Röntgendetektor, der eine Vielzahl von weiteren Detektorelementen aufweist, die jeweils zur Erfassung einer Intensität von auf das weitere Detektorelement auftreffender Röntgenstrahlung ausgebildet sind, und mindestens ein weiteres Röntgenoptikarray vorhanden, das zwischen dem Untersuchungsobjekt und den weiteren Detektorelementen angeordnet ist und eine Vielzahl von weiteren Röntgenoptiken enthält, die so angeordnet sind, dass vom Untersuchungsobjekt auf eine der weiteren Röntgenoptiken auftreffende Röntgenstrahlung auf mehrere der weiteren Detektorelemente abgebildet wird. Der weitere Röntgendetektor bildet gemeinsam mit dem weiteren Röntgenoptikarray eine zusätzliche Detektionseinheit, zusätzlich zu der ersten Detektionseinheit aus Röntgendetektor und Röntgenoptikarray. Die Verwendung von zwei oder mehr Detektionseinheiten kann beispielsweise wie folgt angeordnet werden: Es kann eine Detektionseinheit für Streustrahlen, eine weitere Detektionseinheit für Primärstrahlen verwendet werden. Es können zwei oder mehr Detektionseinheiten für Streustrahlen verwendet werden, wobei die Detektionseinheiten das Untersuchungsobjekt aus unterschiedlichen Winkeln betrachten. Hierzu können die Detektionseinheiten insbesondere in unterschiedlichen Winkeln zu einer geraden Linie zwischen Röntgenquelle und Untersuchungsobjekt angeordnet sind. Eine andere Möglichkeit ist, die Detektionseinheiten ringförmig um das Untersuchungsobjekt herum anzuordnen. Jede der genannten Anordnungen mit Detektionseinheiten für Streustrahlen kann mit einer weiteren Detektionseinheit für Primärstrahlen kombiniert werden.

Die oben genannte Aufgabe wird ebenfalls gelöst durch ein Verfahren zur Untersuchung eines dreidimensionalen Untersuchungsobjekts mit den Schritten des Anspruchs 13. Vorteilhafte Ausgestaltungen des Verfahrens sind in den sich anschließenden Unteransprüchen angegeben. Das Verfahren weist die folgenden Schritte auf:
- Aussenden von Röntgenstrahlen mit einer Röntgenquelle,
- Anordnen eines Röntgendetektors, der eine Vielzahl von Detektorelementen aufweist, in einem Abstand von dem Untersuchungsobjekt,
- Anordnen eines Röntgenoptikarrays, das eine Vielzahl von Röntgenoptiken enthält, zwischen dem Untersuchungsobjekt und den Detektorelementen,
- Abbilden von vom Untersuchungsobjekt auf eine der Röntgenoptiken auftreffender Röntgenstrahlung auf mehrere Detektorelemente des Röntgendetektors,
- Erfassen von Intensitäten der auf die Detektorelemente auftreffenden Röntgenstrahlung,
- Ermitteln jeweils einer Intensität der von einem Volumenelement des Untersuchungsobjekts ausgehenden Röntgenstrahlung auf Grundlage der erfassten Intensitäten für eine Vielzahl von Volumenelementen des Untersuchungsobjekts.

Zur Erläuterung der Merkmale und Vorteile des Verfahrens wird zunächst auf die vorstehenden Erläuterungen des erfindungsgemäßen Röntgengeräts verwiesen, die entsprechend gelten. Das Verfahren beschreibt insbesondere eine bestimmungsgemäße Verwendung des Röntgengeräts. Soweit sich aus den vorstehend erläuterten Ausgestaltungen des Röntgengeräts Alternativen zur Ausführung des Verfahrens ergeben, können die entsprechenden Merkmale auch mit dem Verfahren kombiniert werden. Beispielsweise kann das Aussenden der Röntgenstrahlen mit einer der in Verbindung mit dem Röntgengerät erläuterten Röntgenquellen erfolgen und sämtliche vorstehend erläuterten Ausgestaltungen des Röntgenoptikarrays können für das erfindungsgemäße Verfahren verwendet werden. Das Ermitteln der Intensitäten der von den Volumenelementen des Untersuchungsobjekts ausgehenden Röntgenstrahlung kann mit Hilfe der vorstehend erläuterten Auswerteeinrichtung erfolgen, usw.

Durch das erfindungsgemäße Verfahren können Informationen über den inneren Aufbau des Untersuchungsobjekts gewonnen werden, weil durch die Zwischenschaltung des Röntgenoptikarrays ein größerer Teil des Informationsgehalts der vom Untersuchungsobjekt kommenden Röntgenstrahlung für die Auswertung zugänglich gemacht wird. Auch hierzu wird auf die vorstehenden Erläuterungen des Röntgengeräts verwiesen.

In einer Ausgestaltung des Verfahrens umfasst das Abbilden der von dem Untersuchungsobjekt ausgehenden Röntgenstrahlen das Erzeugen eines Bildes des Untersuchungsobjekts mit einer weiteren Röntgenoptik und ein Abbilden dieses Bildes mittels des Röntgenoptikarrays auf die Detektorelemente. Hierzu wird auf die vorstehenden Erläuterungen der korrespondierenden Vorrichtungsmerkmale verwiesen.

In einer Ausgestaltung des Verfahrens erfolgt das Ermitteln der Intensitäten der von den Volumenelementen des Untersuchungsobjekts ausgehenden Röntgenstrahlung mit Hilfe von Berechnungsmethoden der plenoptischen Fotografie. Bei der plenoptischen Fotografie wird der Informationsgehalt des gesamten, von der

Oberfläche eines Objekts reflektierten sichtbaren Lichts ausgewertet, indem zwischen dem Objekt und dem Bildsensor einer plenoptischen Kamera ein Mikrolinsenarray angeordnet wird, mit dem das auftreffende Licht auf unterschiedliche und ggfs. überlappende Bereiche des Bildsensors abgebildet wird. Dadurch wird insbesondere eine Information darüber, unter welchem Winkel das Licht vom Untersuchungsobjekt auf das Mikrolinsenarray auftrifft, zugänglich und kann zur Berechnung einer Tiefeninformation herangezogen werden. Im Bereich der plenoptischen Fotografie werden die zusätzlichen Informationen vorwiegend genutzt, um eine nachträglich Fokussierung des Bildes zu ermöglichen. Erste plenoptische Kameras für den professionellen und für den Amateureinsatz sind kommerziell erhältlich, insbesondere von den Herstellern Raytrix und Lytro. Die aus der plenoptischen Fotografie bekannten Berechnungsmethoden sind im Einzelnen beispielsweise in den nachfolgend aufgeführten Veröffentlichungen beschrieben: "Light Field Photography with a hand-held Plenoptic Camera" von Ren Ng, Stanford Tech Report CTSR 2005-02, WO 2007/115281 A1 und WO 2010/121637 A1.

Nachfolgend wird die Erfindung anhand von in Figuren dargestellten Ausführungsbeispielen näher erläutert. Es zeigen:
- Fig. 1: ein Röntgengerät mit einer Röntgenquelle und einer weiteren Röntgenoptik in einer schematischen Darstellung,
- Fig. 2: ein Röntgengerät mit einer innerhalb des Untersuchungsobjekts angeordneten Röntgenquelle und einer weiteren Röntgenoptik in einer schematischen Darstellung,
- Fig. 3: ein Röntgengerät mit einer Röntgenquelle, einer weiteren Röntgenoptik und einem Streustrahlenraster in einer schematischen Darstellung,
- Fig. 4: zwei schematische Darstellungen einer Mikrokanalplatte als Beispiel einer Reflexionsoptik,
- Fig. 5: zwei schematische Darstellungen einer Hummeraugenoptik als weiteres Beispiel einer Reflexionsoptik (Darstellung basierend auf US 7,231,017 B2),
- Fig. 6: eine schematische Darstellung einer Fresnel-Zonenplatte als Beispiel einer Beugungsoptik (Darstellung basierend auf einer Abbildung der genannten Dissertation von Markus Simon),
- Fig. 7: eine schematische Darstellung einer durch Prägen einer Metallfolie hergestellten Parabollinse,
- Fig. 8: eine schematische Darstellung einer gerollten Prismen-/Röntgenlinse als weiteres Beispiel einer Beugungsoptik (Darstellung basierend auf der genannten Dissertation von Markus Simon).

In allen Figuren werden für sich entsprechende Elemente dieselben Bezugszeichen verwendet.

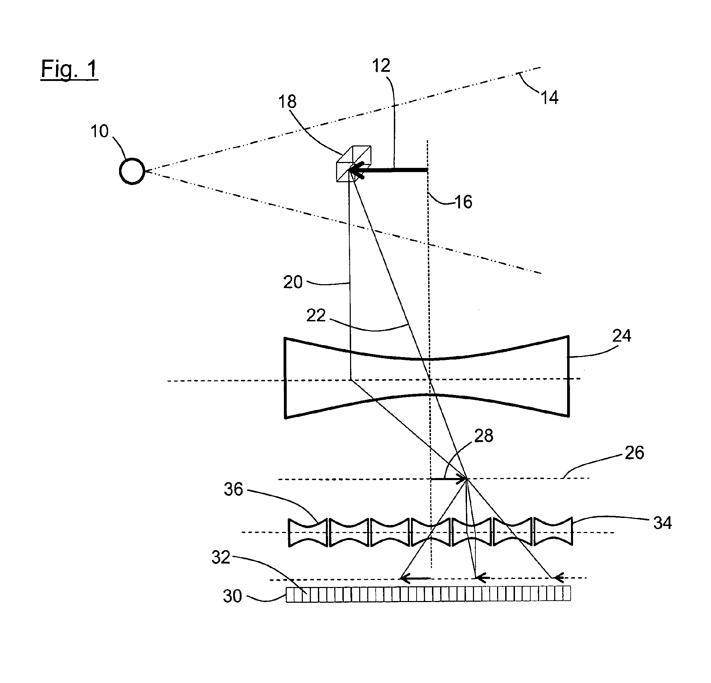

Figur 1 zeigt ein Röntgengerät mit einer Röntgenquelle 10, die durch einen Kreis veranschaulicht ist. Bei der Röntgenquelle 10 handelt es sich beispielsweise um eine Röntgenröhre, in der Elektronen auf ein Target beschleunigt werden. Beim Abbremsen der Elektronen in dem Target entsteht als Bremsstrahlung Röntgenstrahlung mit einem definierten Wellenlängenbereich, die in Richtung auf ein dreidimensionales Untersuchungsobjekt 12 abgestrahlt wird, wie durch den Kegel 14 verdeutlicht. Das dreidimensionale Untersuchungsobjekt 12 kann beispielsweise ein Teil eines menschlichen Körpers oder ein technischer Gegenstand sein. In der Figur 1 wird das dreidimensionale Untersuchungsobjekt 12 durch einen an einer optischen Achse 16 beginnenden Pfeil dargestellt, dessen Spitze auf ein bestimmtes Volumenelement 18 des Untersuchungsobjekts 12 zeigt. Das Volumenelement 18 ist in der Figur 1 durch ein Kästchen dargestellt.

Innerhalb des Volumenelements 18 gestreute Röntgenstrahlung wird beispielhaft durch zwei Streustrahlen 20, 22 dargestellt. Tatsächlich gehen von dem Volumenelement 18 in Abhängigkeit der Streueigenschaften des dreidimensionalen Untersuchungsobjekts 12 natürlich sehr viel mehr Streustrahlen in unterschiedliche Richtungen aus.

In einem Abstand von dem dreidimensionalen Untersuchungsobjekt 12 befindet sich eine weitere Röntgenoptik 24, dargestellt als bikonkave Röntgenlinse. Wie bereits erläutert, kann grundsätzlich eine beliebige andere Röntgenoptik verwendet werden, die die gewünschten Abbildungseigenschaften aufweist. Die weitere Röntgenoptik 24 ist auf der optischen Achse 16 angeordnet. Der Streustrahl 22 trifft auf der optischen Achse 16 auf die weitere Röntgenoptik 24 und tritt geradlinig durch diese hindurch. Der Streustrahl 20 fällt parallel zur optischen Achse 16 auf die weitere Röntgenoptik 24 und wird gebrochen und analog zu einer herkömmlichen Optik, die mit sichtbarem Licht arbeitet, auf denselben Punkt abgebildet wie der Streustrahl 22. Auf diese Weise entsteht in der Bildebene 26 ein Bild 28 des Untersuchungsobjekts, veranschaulicht wiederum durch einen von der optischen Achse 16 ausgehenden Pfeil.

Ganz unten in der Figur ist ein Röntgendetektor 30 dargestellt, der eine Vielzahl von in einem Raster angeordneten Detektorelementen 32 aufweist. Der Röntgendetektor 30 ist beispielsweise ein Festkörperdetektor, wie er bei herkömmlichen digitalen Röntgengeräten eingesetzt wird. Jedes Detektorelement 32 ist zur Erfassung einer Intensität von auf das Detektorelement 32 auftreffender Röntgenstrahlung ausgebildet.

Zwischen dem dreidimensionalen Untersuchungsobjekt 12 und dem Detektorelement 32 ist ein Röntgenoptikarray 34 angeordnet, das eine Vielzahl von Röntgenoptiken 36 aufweist. Auch die Röntgenoptiken 36 des Röntgenoptikarrays 34 sind im gezeigten Beispiel bikonkave Röntgenlinsen. Sie sind in einem rechteckigen Raster angeordnet, wobei die insgesamt von dem Röntgenoptikarray 34 eingenommene Fläche im Wesentlichen der Fläche des Röntgendetektors 30 gleicht.

Im Beispiel befindet sich das Röntgenoptikarray 34 zwischen der Bildebene 26, auf die das dreidimensionale Untersuchungsobjekt 12 mittels der weiteren Röntgenoptik 24 abgebildet wird, und dem Röntgendetektor 30. Wie in der Figur 1 gezeigt, treffen die durch die Bildebene 26 hindurchtretenden, das Bild 28 des dreidimensionalen Untersuchungsobjekts 12 bildenden Röntgenstrahlen auf unterschiedliche Röntgenoptiken 36 des Röntgenoptikarrays 34 auf. Je nachdem, auf welche der Röntgenoptiken 36 des Röntgenoptikarrays 34 die Röntgenstrahlen unter welchem Winkel auftreffen, werden sie auf eines der Detektorelemente 32 abgebildet. Dabei bildet jede Röntgenoptiken 36 die auftreffende Röntgenstrahlung auf mehrere der Detektorelemente 32 ab.

Wie die Figur 1 außerdem erkennen lässt, wird das Bild 28 von mehreren der Röntgenoptiken 34 auf unterschiedliche Detektorelemente 32 des Röntgendetektors 30 abgebildet, wobei die jeweiligen Detektorelemente 32 in einem unterschiedlichen seitlichen Abstand von nicht dargestellten optischen Achsen der einzelnen Röntgenoptiken 36 angeordnet sind. Anschaulich gesprochen entstehen auf der Fläche des Röntgendetektors 30 mehrere versetzt zueinander angeordnete Bilder des Bildes 28 des dreidimensionalen Untersuchungsobjekts 12.

Mit Hilfe einer die Abbildungseigenschaften der weiteren Röntgenoptik 24 und des Röntgenoptikarrays 34 berücksichtigenden Auswerteeinrichtung des Röntgengeräts, die in der Figur 1 nicht dargestellt ist, kann ausgehend von den von den Detektorelementen 32 erfassten Intensitäten ermittelt werden, welche Röntgenstrahlungsintensität insgesamt von dem Volumenelement 18 des dreidimensionalen Untersuchungsobjekts 12 ausgeht. Diese Ermittlung kann entsprechend für weitere Volumenelemente 18 des dreidimensionalen Untersuchungsobjekts 12 vorgenommen werden, so dass für eine Vielzahl von Volumenelementen 18 des dreidimensionalen Untersuchungsobjekts 12 jeweils eine Intensität der von dem Volumenelement 18 ausgehenden Röntgenstrahlung ermittelt wird.

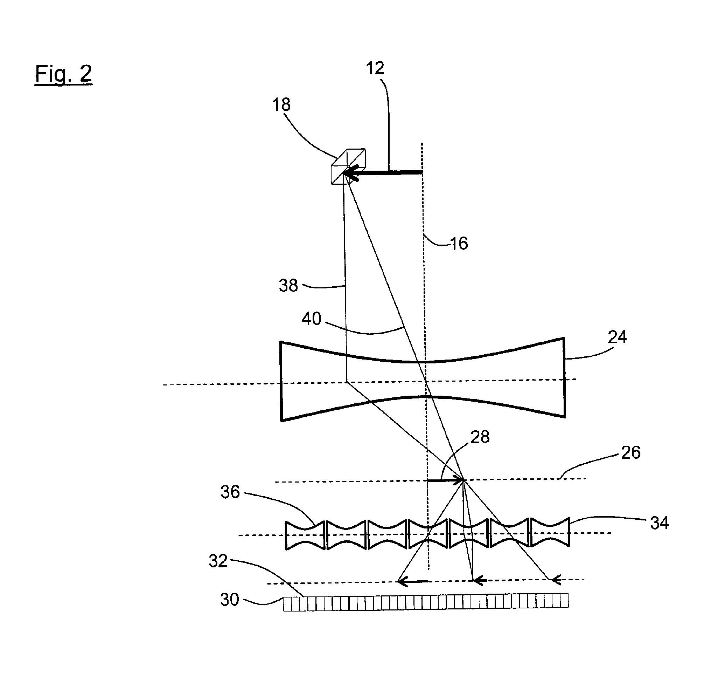

Figur 2 zeigt ein weiteres Ausführungsbeispiel eines Röntgengeräts, bei dem die Anordnung der weiteren Röntgenoptik 24, der Bildebene 26, des Röntgenoptikarrays 34 und des Röntgendetektors 30 der bereits beschriebenen Anordnung aus Figur 1 entspricht. Anders als in der Figur 1 gibt es in der Figur 2 jedoch keine externe Röntgenquelle 10. Stattdessen emittieren die Volumenelemente 18 des dreidimensionalen Untersuchungsobjekts 12 Röntgenstrahlung, weil sie beispielsweise in der Szintigraphie eingesetzte, radioaktive Tracer enthalten. Diese radioaktiven Tracer bilden eine interne Quelle der Röntgenstrahlung. Die von dem Volumenelement 18 ausgehenden Strahlen 38, 40 sind daher keine Streustrahlen, sondern in dem Volumenelement 18 entstandene Röntgenstrahlen. Dennoch entspricht der Verlauf der Strahlen 38, 40 demjenigen der Streustrahlen 20, 22 aus Figur 1 und auch die Auswertung kann in analoger Weise erfolgen.

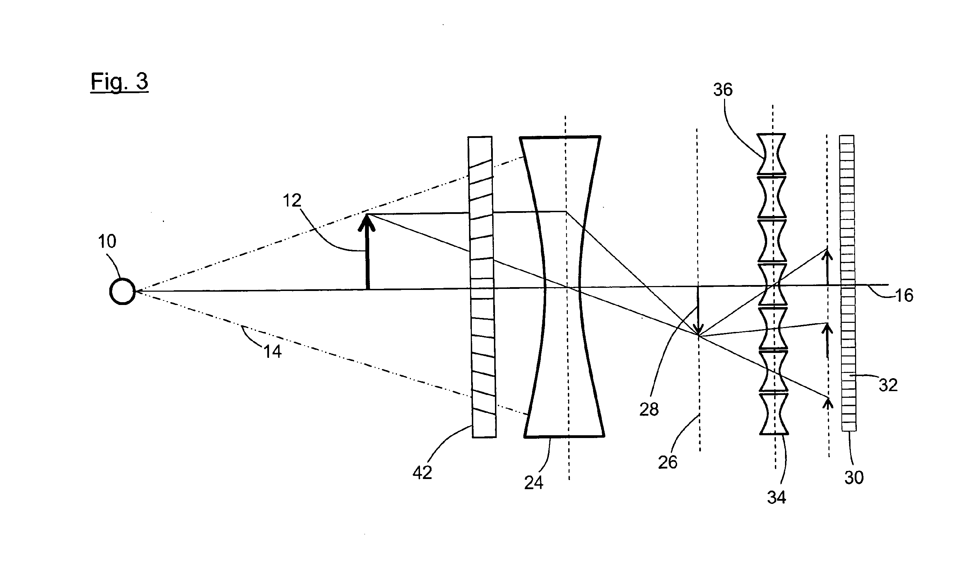

Figur 3 zeigt ein weiteres Ausführungsbeispiel eines Röntgengeräts. Anders als in den Figuren 1 und 2 ist der Röntgendetektor 30 mit den Detektorelementen 32, das Röntgenoptikarray 34 und die weitere Röntgenoptik 24 nicht so angeordnet, dass von der Röntgenquelle 10 stammende Primärstrahlen nicht auftreffen, sondern alle genannten Elemente und zusätzlich das dreidimensionale Untersuchungsobjekt 12 und die Röntgenquelle 10 befinden sich auf einer gemeinsamen optischen Achse 16. Es werden daher auch die von der Röntgenquelle 10 stammenden Primärstrahlen nach dem Durchdringen des Untersuchungsobjekts 12 auf die einzelnen optischen Elemente und schließlich den Röntgendetektor 30 auftreffen. Auf diese Weise sind auch die Primärstrahlen für eine Auswertung verfügbar, so dass insbesondere ein Schwächungsbild des dreidimensionalen Untersuchungsobjekts 12 gewonnen werden kann. Um dennoch zwischen Primärstrahlen und Streustrahlen unterscheiden zu können, weist das in der Figur 3 gezeigte Röntgengerät ein Streustrahlenraster 42 auf, das im Strahlengang angeordnet werden kann. In der Figur 3 ist das Streustrahlenraster 42 zwischen dem dreidimensionalen Untersuchungsobjekt 12 und der weiteren Röntgenoptik 24 angeordnet. Das Streustrahlenraster 42 ist außerdem relativ zur optischen Achse 16 zentriert. Bei der gezeigten Anordnung des Streustrahlenrasters 42 werden ausschließlich Primärstrahlen der Röntgenquelle 10 hindurchgelassen und nur diese treffen auf die weitere Röntgenoptik 24 auf. Streustrahlen, die unter einem anderen Winkel auf das Streustrahlenraster 42 auftreffen, werden herausgefiltert.

Bei dem Röntgengerät der Figur 3 kann das Streustrahlenraster 42 auch aus dem Strahlengang entfernt werden, beispielsweise durch Herausziehen oder Verschwenken. In diesem Fall gelangen sowohl Primär- als auch Streustrahlen auf die weitere Röntgenoptik 24. Durch Subtraktion zweier Messungen, nämlich mit und ohne Streustrahlenraster 42, kann die Primärstrahlung herausgefiltert und ausschließlich die Streustrahlung ausgewertet werden.

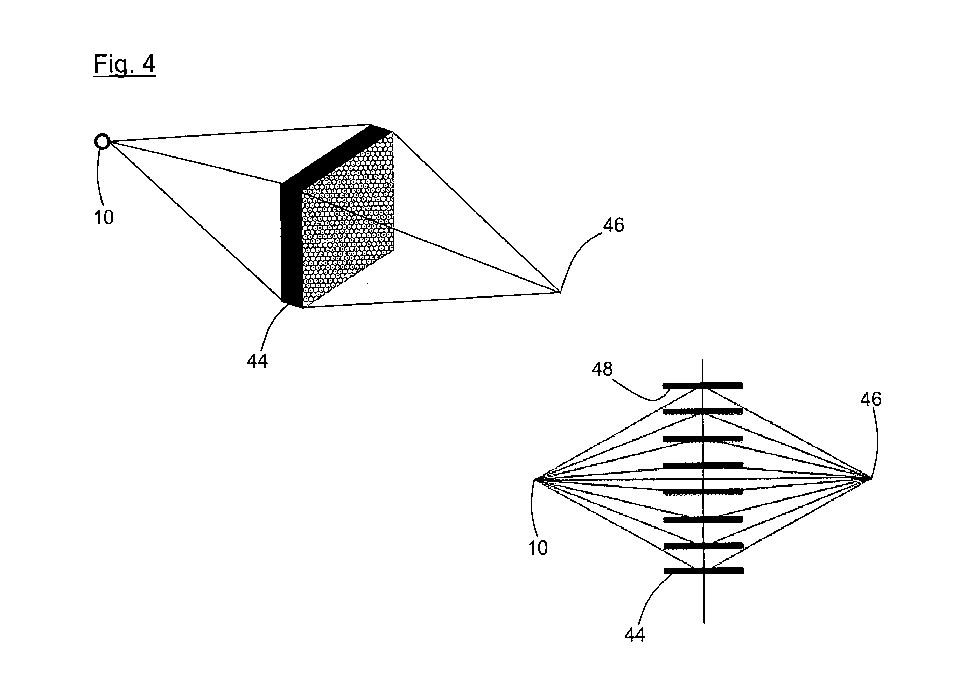

Figur 4 zeigt eine Mikrokanalplatte, links in einer perspektivischen Ansicht mit einer durch eine Kugel dargestellte Röntgenquelle 10. Wie in der Figur dargestellt, erzeugt die Mikrokanalplatte 44 ein Abbild der Röntgenquelle 10 in dem Punkt 46.

Rechts in der Figur 4 ist dieser Strahlengang nochmals im Querschnitt veranschaulicht. Es wird deutlich, dass innerhalb der Mikrokanalplatte 44 eine Vielzahl von parallel zueinander angeordneten Kanälen 48 ausgebildet sind. Diese Mikrokanäle 48 weisen einen rechteckigen Querschnitt auf und die Röntgenstrahlung wird an den Seitenflächen dieser Mikrokanäle 48 reflektiert.

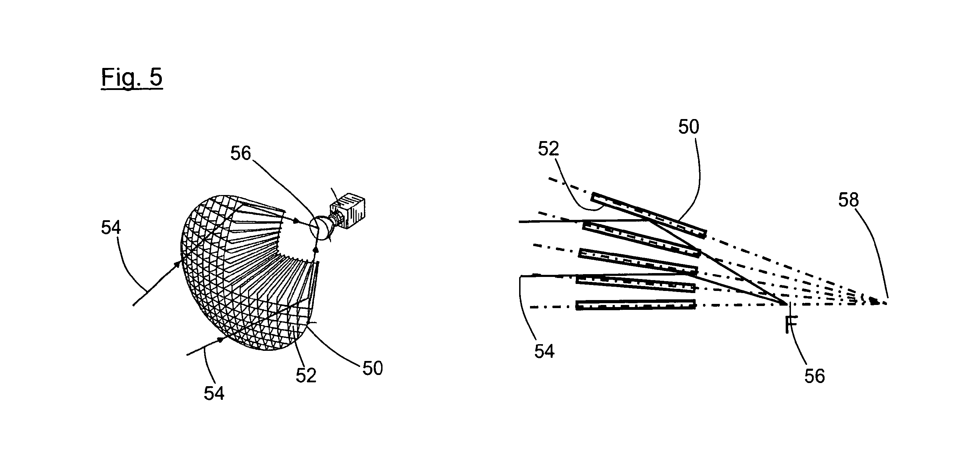

Figur 5 zeigt auf der linken Seite schematisch eine dreidimensionale Darstellung einer Hummeraugenoptik 50. Die Hummeraugenoptik 50 weist eine Vielzahl von Kanälen 52 auf, die zu einem gemeinsamen Mittelpunkt hin orientiert sind. Auf die Hummeraugenoptik 50 auftreffende Röntgenstrahlen 54 werden an den Wandflächen der Kanäle 52 zu einem Fokuspunkt 56 hin reflektiert. Genauer handelt es sich nicht um einen Fokuspunkt 56, sondern um eine sphärische Oberfläche, auf die die Röntgenstrahlung fokussiert wird. Die geschilderten Zusammenhänge sind rechts in der Figur 5 nochmals im Querschnitt dargestellt. Gut erkennbar ist die Ausrichtung der Kanäle 52 auf den gemeinsamen Mittelpunkt 58 hin und die Fokussierung der Röntgenstrahlen 54 im Fokuspunkt 56.

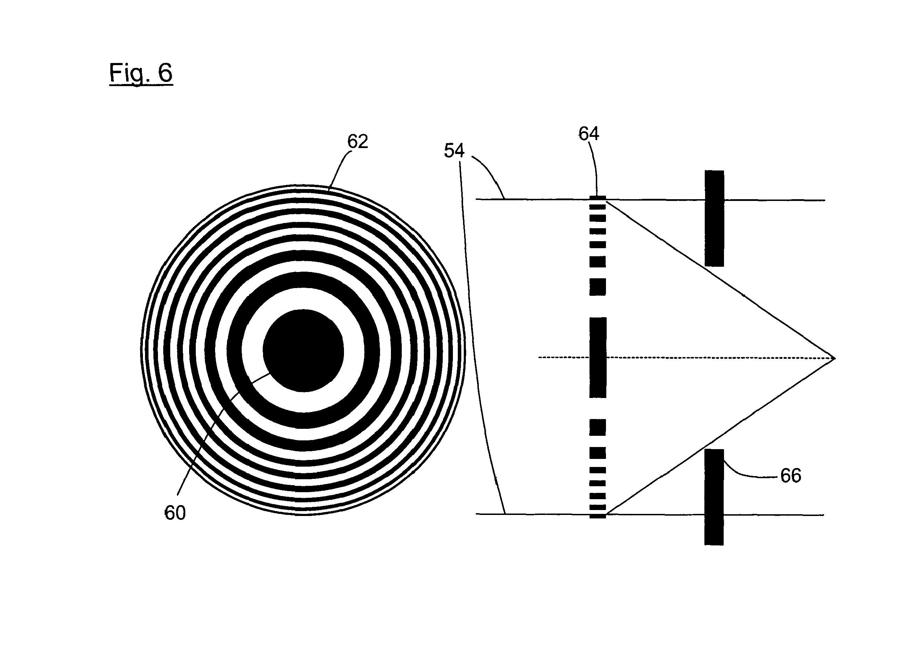

Figur 6 zeigt eine Fresnel-Zonenplatte links in der Draufsicht und rechts im Querschnitt mit einem schematisch angedeuteten Strahlengang. Die Draufsicht zeigt, dass die Fresnel-Zonenplatte aus einem Kreis 60 in der Mitte und konzentrisch dazu angeordneten Kreisringen 62 besteht, deren Breite mit zunehmendem Abstand vom Mittelpunkt abnimmt. Der mittlere Kreis 60 und die die umgebenden Kreisringe 62 bestehen aus einem im Vergleich zu den dazwischen befindlichen Zwischenräumen stärker absorbierenden Material.

Weiter rechts zeigt die Figur 6 schematisch, wie durch die Fresnel-Zonenplatte 64 mittels Beugung eine Fokussierung von parallel auftreffenden Röntgenstrahlen 54 erfolgt. Mit Hilfe einer Blende 66 wird das Beugungsmuster erster Ordnung herausgefiltert. Dieses entspricht einer Art Abbildung der eintreffenden Röntgenstrahlung.

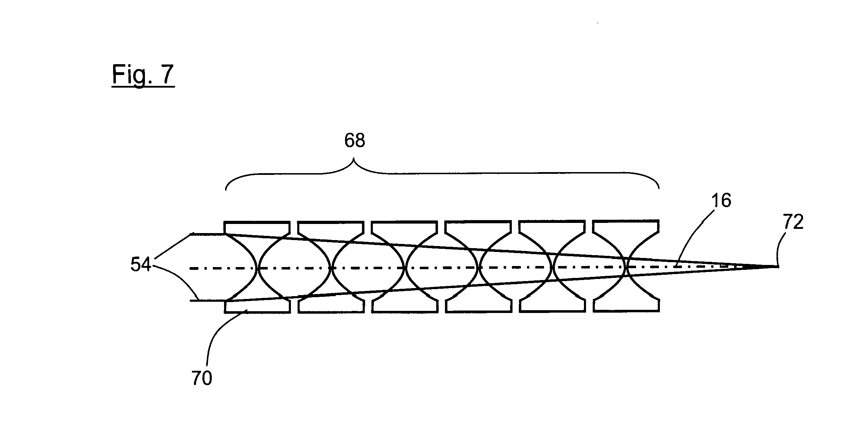

Figur 7 zeigt eine Parabollinse, d.h. eine refraktive Röntgenlinse mit parabolischen Grenzflächen. Die Parabollinse 68 besteht aus sechs entlang einer optischen Achse 16 aufgereihten Linsenelementen 70. Jedes Linsenelement 70 ist mittels Prägen aus einer Metallfolie hergestellt worden. Wie der eingezeichnete Strahlengang zeigt, werden durch die sechs Linsenelemente parallel eintreffende Röntgenstrahlen 54 auf einen Fokuspunkt 72 abgebildet, der sich auf der optischen Achse 16 und in einer der Brennweite f entsprechenden Entfernung von der Mitte der Parabollinse befindet. Die Darstellung zeigt, dass mit einer Parabollinse eine mit herkömmlichen optischen Linsen vergleichbare Abbildung von Röntgenstrahlung erzielt werden kann.

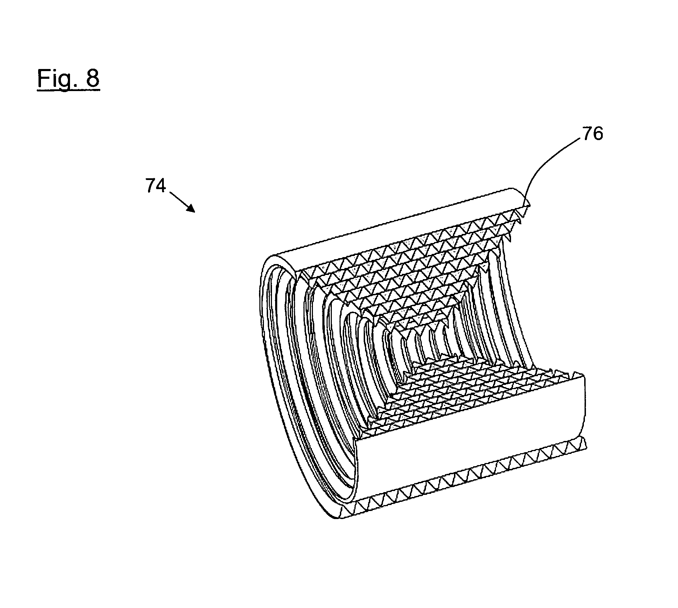

Figur 8 zeigt eine gerollte Prismen-Röntgenlinse 74, die aus einer strukturierten Polymerfolie 76 besteht, die zu einer Spirale aufgerollt ist. Die strukturierte Polymerfolie 76 kann z.B. durch Schleuderbelacken einer strukturierten Siliziumscheibe mit Polyimid hergestellt werden. Dazu können in Siliziumscheiben parallele Rillen mit dreieckigem Querschnitt geätzt werden, z.B. durch anisotropes Ätzen. Anschließend wird die strukturierte Folie um einen dünnen Kern herum aufgerollt, so dass sich die in der Figur 8 gezeigte Anordnung ergibt. Einfallende Röntgenstrahlung wird an den Oberflächen der im Wesentlichen ringförmigen Prismenstrukturen in einen Punktfokus gebrochen.

## Patentansprüche

1. Röntgengerät zur Untersuchung eines dreidimensionalen Untersuchungsobjekts (12) mit
• einem Röntgendetektor (30), der eine Vielzahl von Detektorelementen (32) aufweist, die jeweils zur Erfassung einer Intensität von auf das Detektorelement (32) auftreffender Röntgenstrahlung ausgebildet sind,
• einem Röntgenoptikarray (34), das zwischen dem Untersuchungsobjekt (12) und den Detektorelementen (32) angeordnet ist und eine Vielzahl von Röntgenoptiken (36) enthält, die so angeordnet sind, dass vom Untersuchungsobjekt (12) auf eine der Röntgenoptiken (36) auftreffende Röntgenstrahlung auf mehrere der Detektorelemente (32) abgebildet wird, und
• einer Auswerteeinrichtung, die mit den Detektorelementen (32) erfasste Intensitäten auswertet und auf dieser Grundlage für eine Vielzahl von Volumenelementen (18) des Untersuchungsobjekts (12) jeweils eine Intensität der von dem Volumenelement (18) ausgehenden Röntgenstrahlung ermittelt.

2. Röntgengerät nach Anspruch 1, **dadurch gekennzeichnet, dass** das Röntgengerät eine Röntgenquelle (10) zur Bestrahlung des Untersuchungsobjekts (12) mit Röntgenstrahlen (54) aufweist.

3. Röntgengerät nach Anspruch 2, **dadurch gekennzeichnet, dass** die relative Anordnung von Röntgenquelle (10), Röntgendetektor (30) und Röntgenoptikarray (34) so gewählt ist, dass von der Röntgenquelle (10) ausgestrahlte Primärstrahlung nicht auf den Röntgendetektor (30) trifft.

4. Röntgengerät nach Anspruch 2, **dadurch gekennzeichnet, dass** das Röntgengerät ein Streustrahlenraster (42) aufweist, das zwischen dem Untersuchungsobjekt (12) und dem Röntgenoptikarray (34) angeordnet werden kann.

5. Röntgengerät nach einem der Ansprüche 2 bis 4, **dadurch gekennzeichnet, dass** die Röntgenquelle (10) mindestens zwei Betriebsarten aufweist, in denen sie Röntgenstrahlung unterschiedlicher Wellenlängen ausstrahlt.

6. Röntgengerät nach einem der Ansprüche 1 bis 5, **dadurch gekennzeichnet, dass** das Röntgengerät eine weitere Röntgenoptik (24) aufweist, die zwischen dem Untersuchungsobjekt (12) und dem Röntgenoptikarray (34) so angeordnet ist, dass ein Bild (28) des Untersuchungsobjekts (12) erzeugt und von dem Röntgenoptikarray (34) auf den Röntgendetektor (30) abgebildet wird.

7. Röntgengerät nach Anspruch 6, **dadurch gekennzeichnet, dass** die weitere Röntgenoptik (24) ein weiteres Röntgenoptikarray (34) aufweist.

8. Röntgengerät nach einem der Ansprüche 1 bis 7, **dadurch gekennzeichnet, dass** die weitere Röntgenoptik (24), eine Röntgenoptik (36) des Röntgenoptikarrays (34) und/oder eine Röntgenoptik des weiteren Röntgenoptikarrays (34) eine Reflexionsoptik, eine Beugungsoptik oder eine Brechungsoptik aufweist.

9. Röntgengerät nach Anspruch 8, **dadurch gekennzeichnet dass** die Reflexionsoptik einen gekrümmten Spiegel, eine Mikrokanalplatte (44), eine Hummeraugenoptik (50) oder einen Kristallspiegel aufweist.

10. Röntgengerät nach Anspruch 8 oder 9, **dadurch gekennzeichnet dass** die Beugungsoptik eine Fresnel-Zonenplatte (64) oder ein Beugungsgitter aufweist.

11. Röntgengerät nach einem der Ansprüche 8 bis 10, **dadurch gekennzeichnet dass** die Brechungsoptik eine geprägte Metallfolie, eine gerollte Prismen-Röntgenlinse (74), eine im LIGA-Verfahren hergestellte Röntgenlinse oder eine mittels reaktivem Ionenätzen aus Silizium hergestellte Röntgenlinse aufweist.

12. Röntgengerät nach einem der Ansprüche 1 bis 11, **dadurch gekennzeichnet, dass** mindestens ein weiterer Röntgendetektor (30), der eine Vielzahl von weiteren Detektorelementen aufweist, die jeweils zur Erfassung einer Intensität von auf das weitere Detektorelement auftreffender Röntgenstrahlung ausgebildet sind, und mindestens ein weiteres Röntgenoptikarray (34) vorhanden sind, das zwischen dem Untersuchungsobjekt (12) und den weiteren Detektorelementen angeordnet ist und eine Vielzahl von weiteren Röntgenoptiken enthält, die so angeordnet sind, dass vom Untersuchungsobjekt auf eine der weiteren Röntgenoptiken auftreffende Röntgenstrahlung auf mehrere der weiteren Detektorelemente abgebildet wird.

13. Verfahren zur Untersuchung eines dreidimensionalen Untersuchungsobjekts (12) mit den folgenden Schritten:
• Aussenden von Röntgenstrahlen (54) mit einer Röntgenquelle (10),
• Anordnen eines Röntgendetektors (30), der eine Vielzahl von Detektorelementen (32) aufweist, in einem Abstand von dem Untersuchungsobjekt (12),
• Anordnen eines Röntgenoptikarrays (34), das eine Vielzahl von Röntgenoptiken (36) enthält, zwischen dem Untersuchungsobjekt (12) und den Detektorelementen (32),
• Abbilden von vom Untersuchungsobjekt (12) auf eine der Röntgenoptiken (36) auftreffender Röntgenstrahlung auf mehrere Detektorelemente (32) des Röntgendetektors (30),
• Erfassen von Intensitäten der auf die Detektorelemente (32) auftreffenden Röntgenstrahlung,
• Ermitteln jeweils einer Intensität der von einem Volumenelement (18) des Untersuchungsobjekts (12) ausgehenden Röntgenstrahlung auf Grundlage der erfassten Intensitäten für eine Vielzahl von Volumenelementen (18) des Untersuchungsobjekts (12).

14. Verfahren nach Anspruch 12, **dadurch gekennzeichnet, dass** das Abbilden der von dem Untersuchungsobjekt (12) ausgehenden Röntgenstrahlen (54) das Erzeugen eines Bildes (28) des Untersuchungsobjekt (12) mit einer weiteren Röntgenoptik (24) und ein Abbilden dieses Bildes (28) mittels des Röntgenoptikarrays (34) auf die Detektorelemente (32) umfasst.

15. Verfahren nach Anspruch 13 oder 14, **dadurch gekennzeichnet, dass** das Ermitteln der Intensitäten der von den Volumenelementen (18) des Untersuchungsobjekts (12) ausgehenden Röntgenstrahlung mithilfe von Berechnungsmethoden der plenoptischen Fotografie erfolgt.
